(19) Europäisches Patentamt / European Patent Office / Office européen des brevets

(11) **EP 2 352 277 A1**

(12) **EUROPEAN PATENT APPLICATION**
published in accordance with Art. 153(4) EPC

(43) Date of publication:
03.08.2011 Bulletin 2011/31

(51) Int Cl.:
*H04N 5/225* (2006.01)    *G02B 1/06* (2006.01)
*G02B 3/00* (2006.01)    *G02B 3/14* (2006.01)
*G02B 7/00* (2006.01)    *G03B 19/00* (2006.01)
*H04N 5/335* (2011.01)

(21) Application number: 09825897.3

(22) Date of filing: 10.11.2009

(86) International application number:
PCT/JP2009/005996

(87) International publication number:
WO 2010/055643 (20.05.2010 Gazette 2010/20)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 12.11.2008 JP 2008289618

(71) Applicant: Sharp Kabushiki Kaisha
Osaka-shi, Osaka 545-8522 (JP)

(72) Inventor: OMORI, Keisuke
Osaka 545-8522 (JP)

(74) Representative: Müller - Hoffmann & Partner
Patentanwälte
Innere Wiener Strasse 17
81667 München (DE)

(54) **IMAGING DEVICE**

(57)    A multi-eye imaging device includes M imaging systems each having an optical system and an imaging element (M is a natural number greater than or equal to 2). The imaging systems include one reference imaging system and M-1 dependent imaging systems. An imaging surface of an imaging element of the reference imaging system and an imaging surface of an imaging element of the dependent imaging system are arranged in substantially the same plane. The imaging element of the reference imaging system and the imaging element of the dependent imaging system are arranged on a straight line that is substantially parallel with a pixel arrangement direction of the imaging element. when a length of one pixel of the imaging element is W, an imaging element of an L-th dependent imaging system (L is a positive integer having a maximum value of M-1) among the dependent imaging systems is arranged at a distance of $W \times ((L/M) + N)$ (N is a natural number including 0) in a direction substantially orthogonal to the straight line in the plane with respect to the imaging element of the reference imaging system. This configuration make it possible to generate a high resolution image without performing complex control on the optical systems.

FIG. 1

**Description**

TECHNICAL FIELD

The present invention relates to an imaging device using a plurality of imaging elements.
This application claims priority to and the benefits of Japanese Patent Application No. 2008-289618 filed on November 12, 2008, the disclosure of which is incorporated herein by reference.

BACKGROUND ART

In recent years, as multi-pixel or high definition progresses due to high performance of imaging devices such as digital still cameras and digital video cameras, there is a problem in that a size of an optical system, such as a lens, or an imaging element is increased to sufficiently exhibit optical performance of the imaging device.

In order to resolve such a problem, a multi-eye imaging device for generating one high resolution image having a great pixel number by imaging a common subject using a plurality of small and thin imaging systems having a relatively small pixel number and synthesizing a plurality of obtained images has been proposed (e.g., see Non-Patent Document 1). The multi-eye imaging device includes two imaging systems, a left imaging system and a right imaging system, which image the same subject by shifting sampling phases by 1/2 pixels. Two obtained images are synthesized to obtain a high resolution output image from the images obtained by the respective imaging systems.

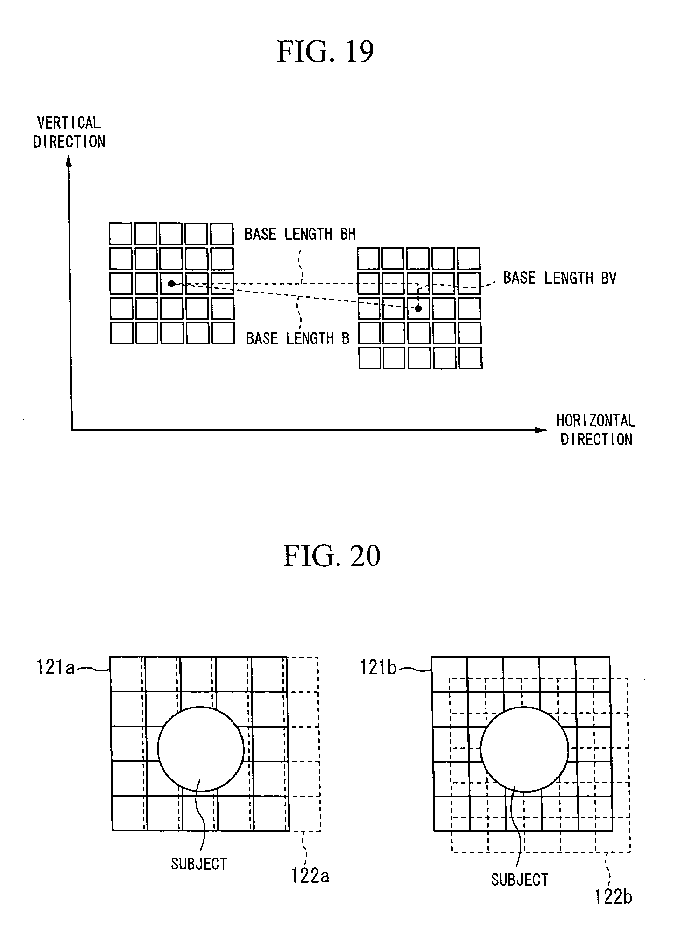

The sampling phase cited herein is a spatial phase of a position in which an imaging element of each imaging system performs imaging when a subject is imaged by a plurality of imaging systems. The sampling phase will be described with reference to FIG 20. In FIG. 20, areas imaged by a left imaging system are shown using grids 121a and 121b, and areas imaged by a right imaging system are shown using grids 122a and 122b (dotted lines), in which each minimal square indicates an area imaged by one pixel. In the grids 121a and 122a shown in FIG. 20, imaging positions of the respective pixels of the imaging elements of the two imaging systems substantially overlap and the sampling phases match. On the other hand, in the grids 121b and 122b shown in FIG 20, imaging positions of the respective pixels of the imaging elements of the two imaging systems are shifted by 1/2 pixels in both horizontal and vertical directions, and the sampling phases are shifted by 1/2 pixels in both horizontal and vertical directions. To generate a high resolution image using such a multi-eye imaging device, it is necessary to perform imaging so that the sampling phases of the two imaging systems do not match, but when a distance from the imaging element to the subject is changed, the sampling phases of the two imaging systems are changed, and the sampling phases may match depending on the imaging distance.

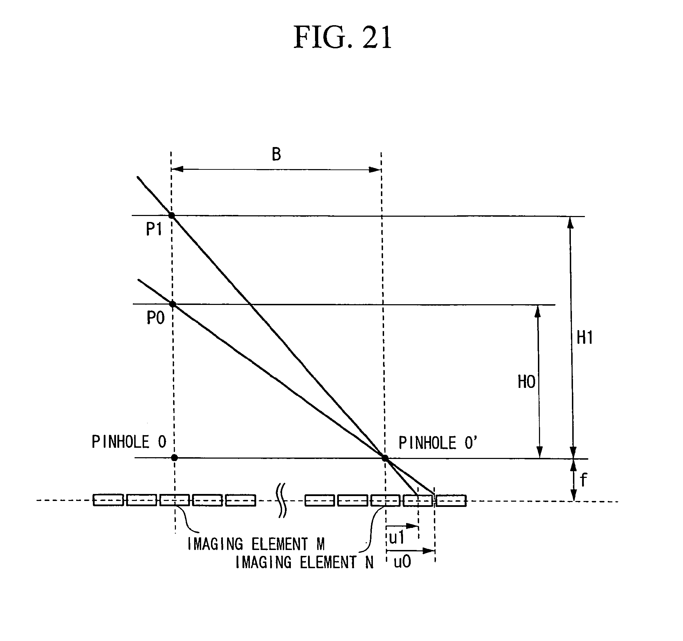

FIG. 21 shows a schematic diagram illustrating a change of a sampling phase when a distance to a subject is changed in imaging the subject using two imaging systems. In FIG. 21, an imaging element M corresponds to a left imaging system and an imaging element N corresponds to a right imaging system. The subject is at a point P0 or P1 and is located on an optical axis of the imaging element M, i.e., an optical axis of a pinhole O. When an imaging distance is changed from H0 in which the subject is at P0 to H1 in which the subject is at P1, a shift amount of the sampling phase is u0-u1, which is expressed by an equation:

$$u0\text{-}u1 = f \times B \times ((1/H0) - (1/H1)) \cdots (1)$$

Here, f is a focal length and B is a base length.

For example, when the focal length f is 5 mm, the base length B is 12 mm, the imaging distance H0 is 700 mm, and the imaging distance H1 is 725 mm, a shift amount on the imaging element N is about 3 $\mu$m based on Equation (1). When a pixel pitch of the imaging element is 6 $\mu$m, the imaging distance is changed from 700 mm to 725 mm, such that the sampling phase is shifted by about 1/2 pixels. It is assumed that the sampling phase is shifted by 1/2 pixels at the imaging distance of 700 mm. When the imaging distance is changed to 725 mm, 1/2+1/2=1 and the sampling phase is shifted by one pixel. This means that the sampling phase is shifted by one pixel, but, as a result, pixels overlap with each other and the sampling phases match, such that high resolution cannot be realized.

Non-Patent Document 1: The Institute of Image Electronics Proceedings 90-03-04 (p23-28)

DISCLOSURE OF INVENTION

Problem to be Solved by the Invention

In order to resolve this problem, it is necessary to control the two imaging systems according to the imaging distance and shift the sampling phases. A method of shifting the sampling phases includes, for example, a method of changing a convergence angle (an angle between optical axes of the two imaging systems).

However, the imaging device becomes complex and large to change the convergence angle according to the imaging distance. For example, it is assumed that a subject away from the imaging device at 30 km/h is imaged. When the subject is initially in a position of the imaging distance of 1000 mm, the subject moves to a position of the imaging distance of 9333 mm after one second. When this subject is imaged by a multi-eye imaging device having a focal length f of 5 mm, a base length B of 12 mm, and an imaging element pixel pitch of 6 $\mu$m, the sampling phase is shifted by about 9 pixels based on Equation (1). That is, a moment at which the subject occupies a position of an imaging distance at which the sampling phases match nine times a second is generated. In order to always obtain a high resolution image from a moving subject, it is necessary to shift the sampling phases by changing the convergence angle at least at the imaging distance at which the sampling phases match. Accordingly, there is a need for a device configuration capable of changing the convergence angle at least nine times a second, making the device complex and large, and requiring complex movement control over the optical system.

Further, in such a problem, only a part of the subject can be obtained with high resolution when the subject has depth despite being stationary. For example, it is assumed that different subjects A and B are simultaneously imaged by a multi-eye imaging device having a focal length f of 5 mm, a base length B of 12 mm, and an imaging element pixel pitch of 6 $\mu$m, and imaging distances are 700 mm and 725 mm, respectively. When the sampling phase at the imaging distance of 700 mm is shifted by 1/2 pixels so that the subject A is obtained with high resolution, the sampling phase at the imaging distance of 725 mm, based on Equation (1), is shifted by 1/2 pixels with respect to the imaging distance of 700 mm, such that 1/2+1/2=1, the sampling phases match, and the subject B cannot be realized with high resolution. Accordingly, different subjects A and B in positions of different depths despite being stationary cannot be simultaneously imaged with high resolution. That is, when a subject has depth, a part of an imaging area cannot be obtained with high resolution.

The present invention is made in view of the aforementioned problems, and has an object to provide an imaging device capable of generating a high resolution image with a simple device configuration without performing complex control on optical systems.

Means for Solving the Problem

A multi-eye imaging device, according to first aspect of the present invention, including M imaging systems each having an optical system and an imaging element (M is a natural number greater than or equal to 2), wherein the imaging systems include one reference imaging system and M-1 dependent imaging systems, an imaging surface of an imaging element of the reference imaging system and an imaging surface of an imaging element of the dependent imaging system are arranged in substantially the same plane, the imaging element of the reference imaging system and the imaging element of the dependent imaging system are arranged on a straight line that is substantially parallel with a pixel arrangement direction of the imaging element, and when a length of one pixel of the imaging element is W, an imaging element of an L-th dependent imaging system (L is a positive integer having a maximum value of M-1) among the dependent imaging systems is arranged at a distance of Wx((L/M) +N) (N is a natural number including 0) in a direction substantially orthogonal to the straight line in the plane with respect to the imaging element of the reference imaging system.

In the imaging device according to the first aspect of the present invention, N may be 0.

A multi-eye imaging device, according to second aspect of the present invention, including M imaging systems each having an optical system and an imaging element (M is a natural number greater than or equal to 2), wherein the imaging systems include one reference imaging system and M-1 dependent imaging systems, the optical system of at least one of the dependent imaging systems include an optical axis control unit which controls an optical axis, an imaging surface of an imaging element of the reference imaging system and an imaging surface of an imaging element of the dependent imaging system are arranged in substantially the same plane, the imaging element of the reference imaging system and the imaging element of the dependent imaging system are arranged on a straight line that is substantially parallel with a pixel arrangement direction of the imaging element, and when a length of one pixel of the imaging element is W, an imaging element of an L-th dependent imaging system (L is a positive integer having a maximum value of M-1) among the dependent imaging systems is arranged at a distance of $W \times ((L/M) +N)$ (N is a natural number including 0) in a direction substantially orthogonal to the straight line with respect to the imaging element of the reference imaging system substantially in the plane by controlling the optical axis using the optical axis control unit.

In the imaging device according to the second aspect of the present invention, N may be 0.

In the imaging device according to the first or second aspect of the present invention, an arrangement direction of the dependent imaging system and the reference imaging system may be substantially orthogonal to an arrangement direction of one dependent imaging system other than said dependent imaging system and said reference imaging system.

In the imaging device according to the second aspect of the present invention, the reference imaging system may include an optical member having substantially the same optical distance as the optical axis control unit.

In the imaging device according to the second aspect of the present invention, the optical axis control unit may include a non-solid lens having a variable refractive index distribution, and an optical axis of light incident to the imaging element may be deflected by changing the refractive index distribution of the non-solid lens.

In the imaging device according to the second aspect of the present invention, the optical axis control unit may include a refraction plate and a tilt angle changing means which changes a tilt angle of said refraction plate, and an optical axis of light incident to the imaging element may be deflected by changing the tilt angle of the refraction plate using the tilt angle changing means.

In the imaging device according to the second aspect of the present invention, the optical axis control unit may include a variable apex angle prism, and an optical axis of light incident to the imaging element may be deflected by changing an apex angle of the variable apex angle prism.

In the imaging device according to the second aspect of the present invention, the optical axis control unit may include a moving means which moves the solid lens, and an optical axis of light incident to the imaging element may be deflected by moving the solid lens.

In the imaging device according to the second aspect of the present invention, the optical axis control unit may include a moving means which moves the imaging element, and an optical axis of light incident to the imaging element may be controlled by moving the imaging element.

Effect of the Invention

According to the present invention, in a multi-eye imaging device for generating a high resolution image having a great pixel number by imaging a common subject using a plurality of imaging systems and synthesizing a plurality of obtained images, it is possible to generate a high resolution image without performing complex control on the optical systems.

BRIEF DESCRIPTION OF THE DRAWINGS

FIG. 1 is a diagram showing an arrangement of imaging systems in a first embodiment of the present invention.
FIG. 2 is an illustrative diagram showing sampling phase shift due to a change of an imaging distance.
FIG 3 is a diagram showing a shift amount of a sampling phase in a horizontal direction when an imaging distance is changed in a case in which a base length BH is 3 $\mu$m, a pixel pitch is 6 $\mu$m, a focal length is 5 mm, and an imaging distance is 500 mm.
FIG 4 is a diagram showing an arrangement of imaging systems in a second embodiment of the present invention.
FIG. 5 is a diagram showing an example in which five imaging systems are arranged, three in a vertical direction and three in a horizontal direction.
FIG. 6 is a diagram showing an example in which five imaging systems are arranged, three in a vertical direction and three in a horizontal direction.
FIG 7 is a diagram showing an example in which five imaging systems are arranged, three in a vertical direction and three in a horizontal direction.
FIG. 8 is a diagram showing an example in which seven imaging systems are arranged, four in a vertical direction and four in a horizontal direction.
FIG. 9 is a diagram showing an example in which seven imaging systems are arranged, four in a vertical direction and four in a horizontal direction.
FIG. 10 is a diagram showing an example in which seven imaging systems are arranged, four in a vertical direction and four in a horizontal direction.
FIG. 11 is a diagram showing an arrangement example when the number of imaging systems arranged in a vertical direction differs from that of imaging systems arranged in a horizontal direction.
FIG. 12 is an illustrative diagram showing a state in which an optical axis of each imaging system is adjusted by an optical axis control unit.
FIG 13 is a side view showing an example of a configuration of a liquid crystal lens.
FIG. 14 is a front view showing an example of a configuration of a liquid crystal lens.
FIG. 15 is a diagram showing a principle of optical axis shift by an optical axis control unit.
FIG. 16 is a diagram showing a principle of optical axis shift by an optical axis control unit.
FIG. 17 is a diagram showing a principle of optical axis shift by an optical axis control unit.
FIG. 18 is a diagram showing a principle of optical axis shift by an optical axis control unit.
FIG. 19 is a diagram showing a definition of a division of a base length in the present invention.

FIG. 20 is a diagram showing imaging areas of two imaging systems according to a prior art.

FIG. 21 is a diagram showing a shift of a sampling phase due to a change of the imaging distance when a subject is imaged by two imaging systems.

BEST MODE FOR CARRYING OUT THE INVENTION

Initially, for better understanding of the present invention, a change of sampling phases of two imaging systems will be described with reference to FIG. 21. FIG. 21 is a schematic view illustrating a change of a sampling phase when a distance to a subject is changed in imaging the subject using two imaging systems. As shown in FIG 21, each imaging system including a first imaging system having an optical system (not shown) and an imaging element M, and a second imaging system having an optical system (not shown) and an imaging element N has a configuration in which an optical axis passes through a center of the imaging element.

When an imaging distance is changed from H0 in which the subject is at P0 to H1 in which the subject is at P1, a shift amount of the sampling phases of the two imaging systems is u0-u1 and is expressed as the above-described Equation (1). Accordingly, the shift amount of the sampling phase when the imaging distance is changed depends on a focal length f, a base length B, and imaging distances H0 and H1. In the present invention, the shift amount of the sampling phases when the imaging distance is changed becomes small when a base length B of a plurality of imaging systems is reduced to a small value, thereby realizing high resolution without controlling the sampling phase according to the imaging distance.

Usually, the base length B is a distance between optical axes of two imaging systems. However, in the present invention, a distance (straight line distance) between centers of two imaging elements arranged in the same plane so that pixel arrangement directions are horizontal and vertical directions is the base length B, a distance of a horizontal component of the base length B is a base length BH, and a distance of a vertical component of the base length B is a base length BV, as shown in FIG. 19. For convenience of illustration of the present invention, a case in which pixels of the imaging element are arranged in horizontal and vertical directions will be described, but the imaging elements may be arranged on a substantially straight line in substantially the same plane and the straight line may be substantially coincident with a pixel arrangement direction of each imaging element.

<First Embodiment>

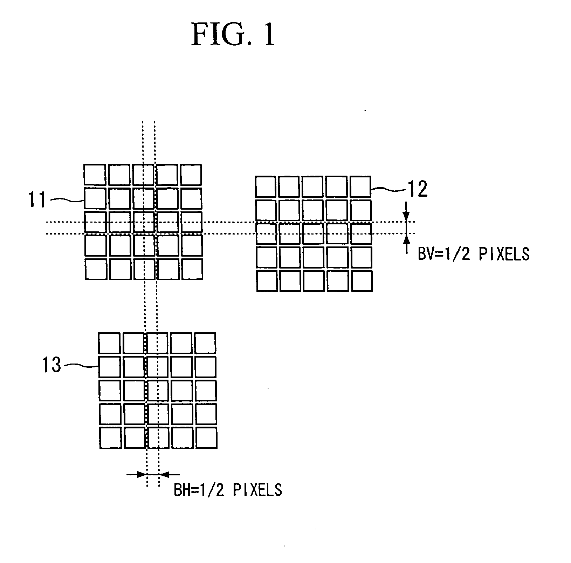

Hereinafter, an imaging device according to a first embodiment of the present invention will be described with reference to the accompanying drawings. FIG. 1 is a diagram showing a configuration of the first embodiment. FIG. 1 is a diagram showing an arrangement of three imaging systems in the imaging device in the present embodiment. Each of the three imaging systems 11, 12 and 13 shown in FIG. 1 includes an optical system (not shown) including, for example, a lens, and an imaging element as a two-dimensional array. In FIG. 1, only the imaging elements are shown. Each pixel of the imaging element included in each of the imaging systems 11, 12 and 13 is substantially a square. While one imaging element will be described herein as being a two-dimensional $5\times5$ array, for example, an imaging element as a two-dimensional array having a pixel number of 640 (horizontal)$\times$480 (vertical) is used in a real imaging device.

The imaging system 11 (referred to as a reference imaging system) and the imaging system 12 (referred to as a dependent imaging system) shown in FIG 1 are arranged side by side to be substantially horizontal, centers of the imaging elements are shifted by 1/2 pixels in a vertical direction orthogonal to an arrangement direction of the two imaging systems 11 and 12, i.e., the horizontal direction, and a base length BV in the vertical direction corresponds to 1/2 pixels. Further, the imaging system 11 and the imaging system 13 (referred to as a dependent imaging system) are arranged side by side to be substantially vertical, centers of the imaging elements are shifted by 1/2 pixels in a horizontal direction orthogonal to an arrangement direction of the two imaging systems, i.e., a vertical direction, and a base length BH in the horizontal direction corresponds to 1/2 pixels. In this configuration, for example, when high resolution is realized using images obtained from the two imaging systems, the imaging system 11 and the imaging system 13, the base length BH in the horizontal direction is small even when the imaging distance is changed, such that a shift amount of the sampling phases in the horizontal direction can be small and the sampling phase shift amount in the horizontal direction can have a substantially constant value irrespective of the imaging distance.

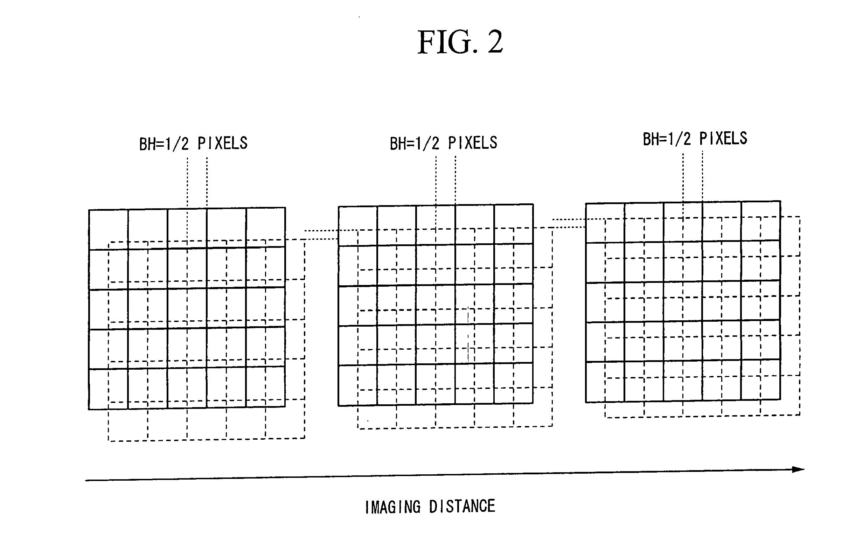

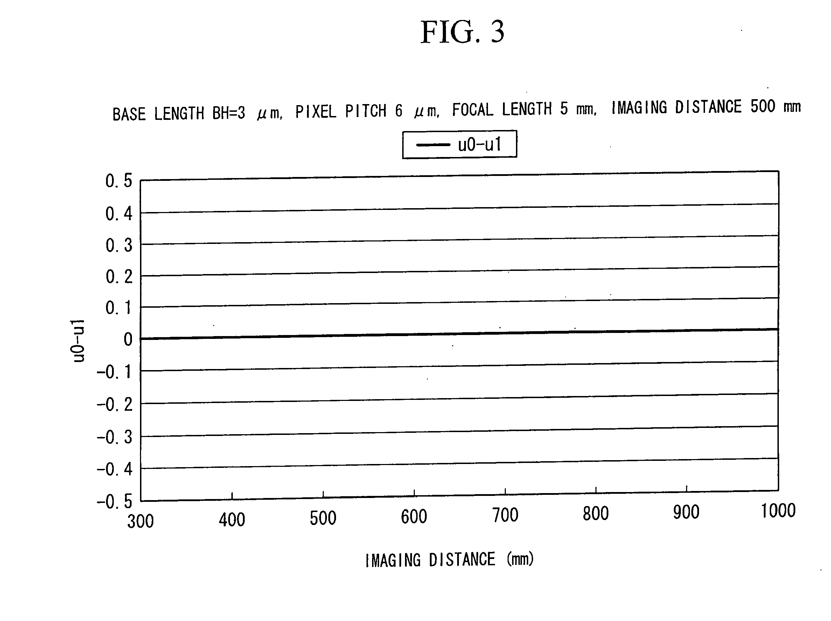

In FIG. 2, a state in which sampling phases of the imaging system 11 and the imaging system 13 that are substantially vertically arranged are shifted due to a change of an imaging distance is shown. FIG. 2 shows a state of the sampling phase when an imaging distance becomes great in order of left, center, and right. As shown in FIG. 2, a sampling phase in a vertical direction is gradually shifted due to the change of the imaging distance. On the other hand, a sampling phase in a horizontal direction is maintained in a state of the sampling phase being shifted by 1/2 pixels irrespective of the imaging distance. For example, when a pixel pitch of an imaging element is 6 $\mu$m, a focal length f is 5 mm, a base length BH is 3 $\mu$m, and an imaging distance H0 is 500 mm, a shift amount u0-u1 of the sampling phase in the horizontal direction when the imaging distance is changed into H1 can be obtained from Equation (1). FIG. 3 is a diagram showing a result obtained by calculating, using Equation (1), a shift amount u0-u1 of the sampling phase in a horizontal direction when the imaging distance is changed in H1, in which a pixel pitch of an imaging element is 6 $\mu$m, a focal length f is 5 mm, a base length BH is 3 $\mu$m, and an imaging distance H0 is 500 mm. As shown in FIG. 3, the shift amount u0-u1 is substantially 0 irrespective of the imaging distance.

Accordingly, when the base length BH is set to correspond to 1/2 pixels of the imaging element and the sampling phase shift between the two imaging systems is set to correspond to 1/2 pixels in advance, the sampling phase shift in the horizontal direction of the imaging system 11 and the imaging system 13 may correspond to substantially 1/2 pixels even when the imaging distance is changed. The base length BH is not limited to the 1/2 pixel, but may correspond to 3/2 pixels, 5/2 pixels, 7/2 pixels, or 9/2 pixels, as expressed by Equation (2), such that the shift amount of the sampling phase in the horizontal direction can be substantially 0 even when the imaging distance is changed.

$$BH=(\text{length of 1 pixel of imaging element})\times(2N+1)/2 \cdots (2)$$

Here, N is a natural number including 0 and preferably has a small value.

For example, when the pixel pitch of the imaging element is 6$\mu$m, the focal length f is 5 mm, the imaging distance H0 is 500 mm, and the base length BH is 21 $\mu$m, that is, when a base length BH corresponds to 7/2 pixels, the shift amount of the sampling phase at infinity can be calculated to be 0.035 pixels by Equation (2). When the sampling phase shift at the imaging distance H0 corresponds to the 1/2 pixels, the sampling phase shift substantially corresponds to 1/2 pixels even at infinity. Accordingly, when the base length BH satisfies Equation (2), the sampling phase is maintained as being substantially shifted by 1/2 pixels even when the imaging distance is changed, realizing high resolution without a device for performing complex control.

While realization of the high resolution in the horizontal direction using the two imaging systems 11 and 13 that are substantially vertically arranged has been described, the two imaging systems arranged substantially horizontally may be similarly arranged so that the base length BV in the vertical direction of the two imaging systems 11 and 12 is a length expressed by Equation (3), for high resolution in the vertical direction.

$$BV=(\text{length of 1 pixel of imaging element})\times(2N+1)/2 \cdots (3)$$

Here, N is a natural number including 0 and preferably has a small value.

Thus, when the imaging system 11 shown in FIG. 1 is used as a reference imaging system and the imaging system 12 is arranged in either a left or right position in the horizontal direction and the imaging system 13 is arranged in either an upper or lower position in a vertical direction to satisfy the conditions (Equation (2) or (3)) for high resolution, high resolution can be realized in both the horizontal and vertical directions by a configuration of the three imaging systems 11, 12 and 13.

Next, a process of synthesizing a high resolution image from three images obtained using the three imaging systems 11, 12 and 13 shown in FIG. 1 will be described. Here, in this description, an image of the imaging system 11 as the reference imaging system is used as a reference image, each of the three imaging systems 11, 12 and 13 uses a 5×5 pixel imaging element, and a 100 pixel (=10 pixels×10 pixels) image is generated by synthesizing the images obtained by the three imaging systems 11, 12 and 13. Even when a pixel number of each imaging element increases, a high resolution image can be synthesized by the same process. First, a pixel of an image of the imaging system 12 shifted by 1/2 pixels in a vertical direction is buried between pixels arranged in a vertical direction of the reference image. Further, a pixel of an image of the imaging system 13 shifted by 1/2 pixels in a horizontal direction is buried between pixels arranged in a horizontal direction of the reference image. This is only for an image of 75 pixels. For another 25 pixels, pixel values are obtained through interpolation from adjacent pixel values in a state in which pixels of images obtained by the imaging system 12 and the imaging system 13 are buried in the reference image obtained by the imaging system 11, and the pixels having the obtained pixel values are buried to generate a high resolution image. This image synthesis process is one example, and a known image synthesis process may be applied.

<Second Embodiment>

Next, a second embodiment of the present invention will be described. While, in the first embodiment, the configuration of the imaging device in which the sampling phases in the horizontal direction of the two imaging systems that are substantially vertically arranged are shifted 1/2 pixels for high resolution in the horizontal direction, and the sampling phases in the vertical direction of the two imaging systems arranged substantially horizontally are shifted by 1/2 pixels for high resolution in the vertical direction, the number of arranged imaging systems may be three or more.

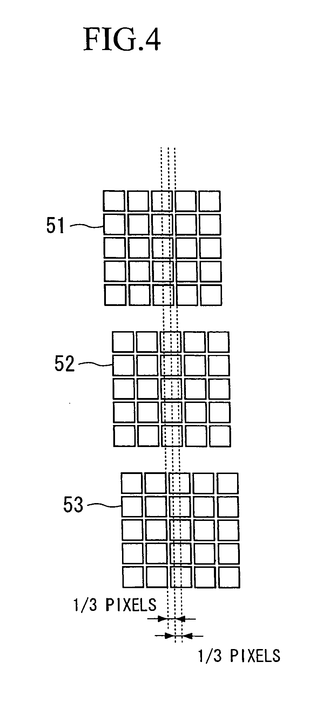

When high resolution is realized by two imaging systems, a state in which the sampling phases are shifted by 1/2 pixels is optimal for high resolution. However, when three or more imaging systems are used for high resolution and the number of imaging systems arranged in one direction is M, a state in which the sampling phases are shifted by 1/M pixels is optimal for high resolution. For example, in the configuration in which the three imaging systems 51, 52 and 53 are vertically arranged as shown in FIG. 4, a state in which the imaging system 51 is used as a reference imaging system and the sampling phases of the two other imaging systems 52 and 53 as dependent imaging systems are shifted by 1/3 pixels and 2/3 pixels in a horizontal direction, respectively, is optimal for high resolution.

When high resolution is realized by M imaging systems that are substantially vertically arranged, one of the M imaging systems is used as a reference imaging system and a base length BH in a horizontal direction of the L-th dependent imaging system among the other M-1 dependent imaging systems with reference to the reference imaging system may satisfy Equation (4).

$$BH = (\text{length of 1 pixel of imaging element}) \times ((L/M) + N) \cdots (4)$$

Here, L is a positive integer having a maximum value of M-1 and N is a natural number including 0. In this case, N preferably has a small value.

Similarly, in order to realize high resolution in the vertical direction, one of the M imaging systems that are arranged substantially horizontally is used as a reference imaging system, and a base length BV in a vertical direction of the L-th dependent imaging system among the other M-1 dependent imaging systems may satisfy Equation (5).

$$BV = (\text{length of 1 pixel of imaging element}) \times ((L/M) + N) \cdots (5)$$

Here, L is a positive integer having a maximum value of M-1 and N is a natural number including 0. In this case, N preferably has a small value.

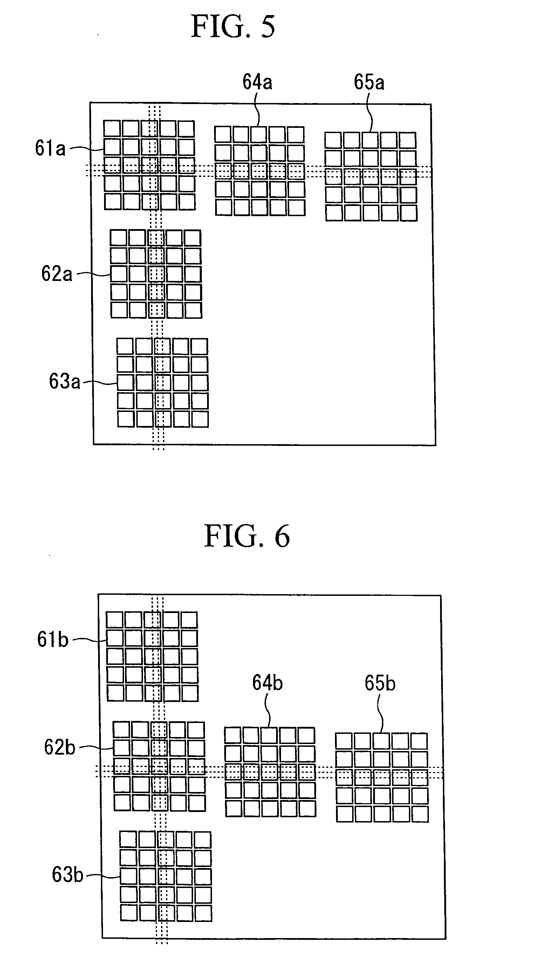

Next, FIGS. 5 to 7 show an example of an arrangement for realizing high resolution using five imaging systems, three (M=3) in a vertical direction and three (M=3) in a horizontal direction. FIG. 5 shows an example in which an imaging system 61a is used as a reference imaging system and a first dependent imaging system 62a and a second dependent imaging system 63a are arranged in a vertical direction and a first dependent imaging system 64a and a second dependent imaging system 65a are arranged in a horizontal direction. Base lengths BH in a horizontal direction of the dependent imaging systems 62a and 63a with respect to the reference imaging system 61a are 1/3 pixels and 2/3 pixels, respectively. Similarly, base lengths BH in a vertical direction of the dependent imaging systems 64a and 65a with respect to the reference imaging system 61a are 1/3 pixels and 2/3 pixels, respectively.

FIG. 6 shows an example in which imaging systems 62b and 63b are arranged in a vertical direction as dependent imaging systems, with an imaging system 61b used as a reference imaging system, and imaging systems 64b and 65b are arranged in a horizontal direction as dependent imaging systems, with an imaging system 62b being used as a reference imaging system. Base lengths BH in a horizontal direction of the dependent imaging systems 62b and 63b with respect to the reference imaging system 61b are 1/3 pixels and 2/3 pixels, respectively. Similarly, base lengths BV in a vertical direction of the dependent imaging systems 64b and 65b with respect to the reference imaging system 62b are 1/3 pixels and 2/3 pixels, respectively.

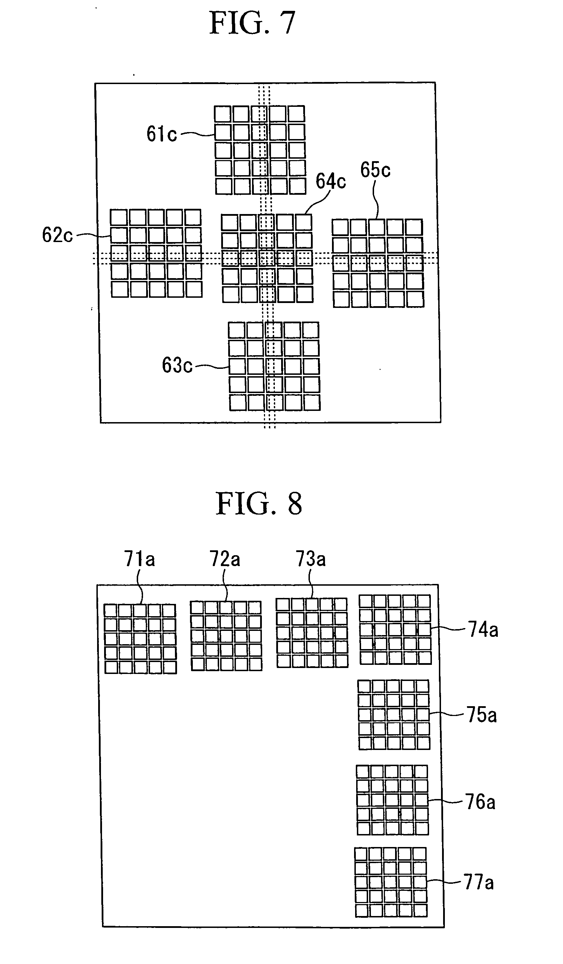

FIG 7 shows an example in which imaging systems 64c and 63c are arranged in a vertical direction as dependent imaging systems, with an imaging system 61c used as a reference imaging system, and imaging systems 64c and 65c are arranged in a horizontal direction as dependent imaging systems with an imaging system 62c used as a reference imaging system. Base lengths BH in a horizontal direction of the dependent imaging systems 64c and 63c with respect to the reference imaging system 61c are 1/3 pixels and 2/3 pixels, respectively. Similarly, base lengths BV in a vertical direction of the dependent imaging systems 64c and 65c with respect to the reference imaging system 62c are 1/3 pixels and 2/3 pixels, respectively.

Next, FIGS. 8 to 10 show examples of arrangements of seven imaging systems for high resolution, in which four imaging systems (M=4) are arranged in a vertical direction and four (M=4) imaging systems are arranged in a horizontal direction. FIG. 8 shows an example in which dependent imaging systems 75a, 76a, and 77a are arranged in the vertical direction, with an imaging system 74a used as a reference imaging system, and dependent imaging systems 71 a, 72a and 73 a are arranged in the horizontal direction, with an imaging system 74a used as a reference imaging system. Base lengths BH in the horizontal direction of the dependent imaging systems 75a, 76a and 77a with respect to the reference imaging system 74a are 1/4 pixels, 2/4 pixel, and 3/4 pixels, respectively. Similarly, base lengths BV in the vertical direction of the dependent imaging systems 71a, 72a and 73a with respect to the reference imaging system 74a are 1/4 pixels, 2/4 pixels and 3/4 pixels, respectively.

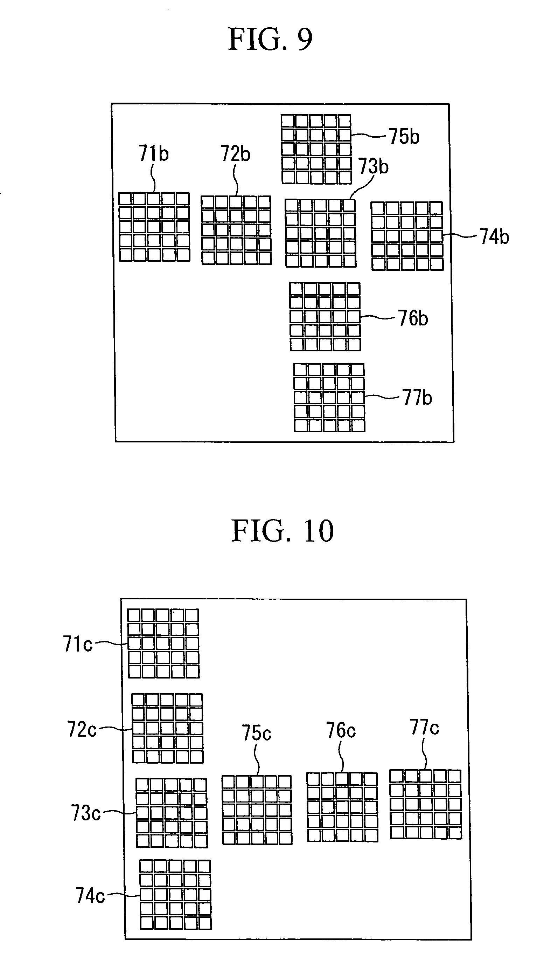

FIG. 9 shows an example in which dependent imaging systems 73b, 76b and 77b are arranged in a vertical direction, with an imaging system 75b used as a reference imaging system, and dependent imaging systems 72b, 73b and 74b are arranged in a horizontal direction, with an imaging system 71b used as a reference imaging system. Base lengths BH in the horizontal direction of the dependent imaging systems 73b, 76b and 77b with respect to the reference imaging system 75b are 1/4 pixels, 2/4 pixels and 3/4 pixels, respectively. Similarly, base lengths BV in the vertical direction of the dependent imaging systems 72b, 73b and 74b with respect to the reference imaging system 71b are 1/4 pixels, 2/4 pixels and 3/4 pixels, respectively.

FIG. 10 shows an example in which dependent imaging systems 72c, 73 c and 74c are arranged in a vertical direction, with an imaging system 71c used as a reference imaging system, and dependent imaging systems 75c, 76c and 77c are arranged in a horizontal direction, with an imaging system 73c used as a reference imaging system. Base lengths BH of the dependent imaging systems 72c, 73c and 74c in a horizontal direction with respect to the reference imaging system 71c are 1/4 pixels, 2/4 pixels and 3/4 pixels, respectively. Similarly, base lengths BV in a vertical direction of the dependent imaging systems 75c, 76c and 77c with respect to the reference imaging system 73c are 1/4 pixels, 2/4 pixels and 3/4 pixels, respectively.

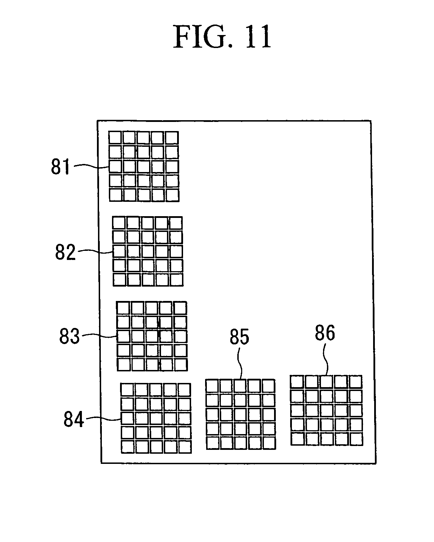

Further, the same applies to a case in which five or more imaging systems are arranged in the vertical direction and the horizontal direction. Further, the number of imaging systems arranged in the horizontal direction may differ from that of imaging systems arranged in the vertical direction. When four imaging systems are arranged in a vertical direction and three imaging systems are arranged in a horizontal direction as shown in FIG. 11, a sampling phase in the horizontal direction of the four imaging systems 81, 82, 83 and 84 arranged in the vertical direction may be shifted by 1/4 pixels, and a sampling phase in the vertical direction of the three imaging systems 84, 85 and 86 arranged in the horizontal direction may be shifted by 1/3 pixels.

Further, a high resolution image synthesis process is the same as the process described in the first embodiment, and pixels of a plurality of images of the imaging system shifted by 1/M pixels in a vertical direction are buried between pixels arranged in a vertical direction of the reference image. Pixels of a plurality of images of the imaging system shifted by 1/M pixels in a horizontal direction are also buried between pixels arranged in a horizontal direction of the reference image. For the other pixels, pixel values are obtained through interpolation from adjacent pixel values, and the pixels having the obtained pixel value are buried to generate a high resolution image. Even in this case, a known image synthesis process may be applied.

<Third Embodiment>

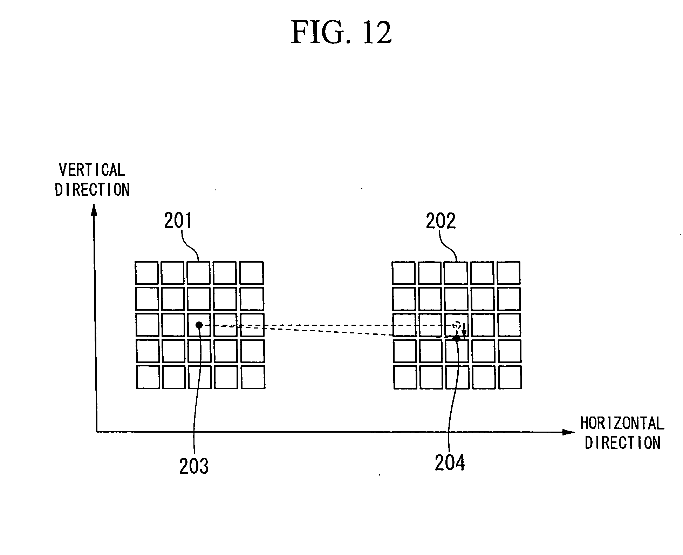

Next, a third embodiment of the present invention will be described. The imaging device can image a subject with a sampling phase for high resolution all the time without performing complex control on the optical systems by arranging imaging systems as described in the first and second embodiments. However, control may be performed with a sampling phase for high resolution to substantially satisfy the conditions expressed in Equations (2), (3), (4) and (5) by adjusting an optical axis of each imaging system using an optical axis control unit included in each imaging system for controlling the optical axis. For example, the base length BV in the vertical direction of the two imaging systems 201 and 202 that are horizontally arranged, as shown in FIG. 12, is 0. However, when an optical axis 204 of the imaging system 202 is shifted by 1/2 pixels in a vertical direction using the optical axis control unit, the base length BV corresponds to 1/2 pixels in appearance, resulting in the sampling phase for high resolution. Thus, in the present embodiment, the optical axis of each imaging system is adjusted by the optical axis control unit so that each imaging system substantially satisfies the conditions expressed by Equations (2), (3), (4) and (5), making it possible to perform imaging with the sampling phase for high resolution.

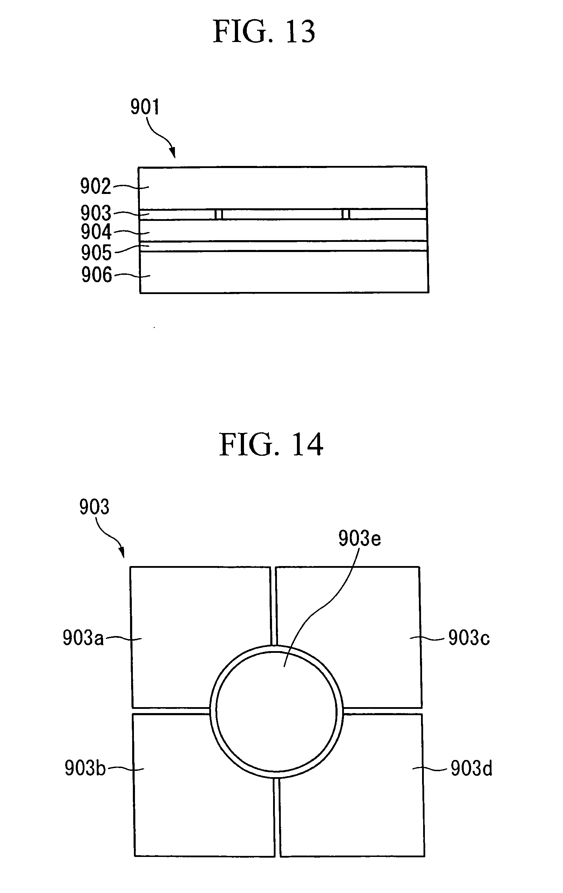

A liquid crystal lens may be used as the optical axis control unit. In FIGS. 13 and 14, a configuration of a liquid crystal lens 901 is shown. FIG. 13 is a side view of the liquid crystal lens 901, and FIG. 14 is a front view of the liquid crystal lens 901 shown in FIG 13. The liquid crystal lens 901 has a structure in which a glass substrate 902, an electrode 903, a liquid crystal layer 904, an electrode 905, and a glass substrate 906 are stacked. The electrode 903 is divided into five electrodes 903a, 903b, 903c, 903d and 903e, as shown in FIG. 14. When a voltage is applied to the electrode 903 and the electrode 905 of the liquid crystal lens 901, an electric field is generated between the two electrodes 903 and 905. Liquid crystal molecules of the liquid crystal layer 904a are aligned in a direction of the electric field. As a result, a refractive index distribution is generated in the liquid crystal layer 904, such that the liquid crystal lens 901 can function as a lens.

In the present embodiment, when different voltages are applied to the respective electrodes of the electrode 903, which is divided into five, the refractive index distribution is generated in the liquid crystal layer 904 and light incident to the liquid crystal layer 904 is deflected, such that an optical axis is shifted and each imaging system is controlled to satisfy the conditions expressed by Equations (2), (3), (4) and (5) in appearance, resulting in high resolution.

Further, the optical axis control unit may be included in the dependent imaging system, but not in the reference imaging system to perform the optical axis adjustment on the reference imaging system. Further, when there is no optical axis control unit in the reference imaging system, an optical distance from the subject is different from that of the dependent imaging system. Accordingly, an optical member, such as glass, having substantially the same optical distance as the optical axis control unit in the dependent imaging system is used in the reference imaging system, such that the imaging systems can be arranged in the same plane and the arrangement can be facilitated.

<Fourth Embodiment>

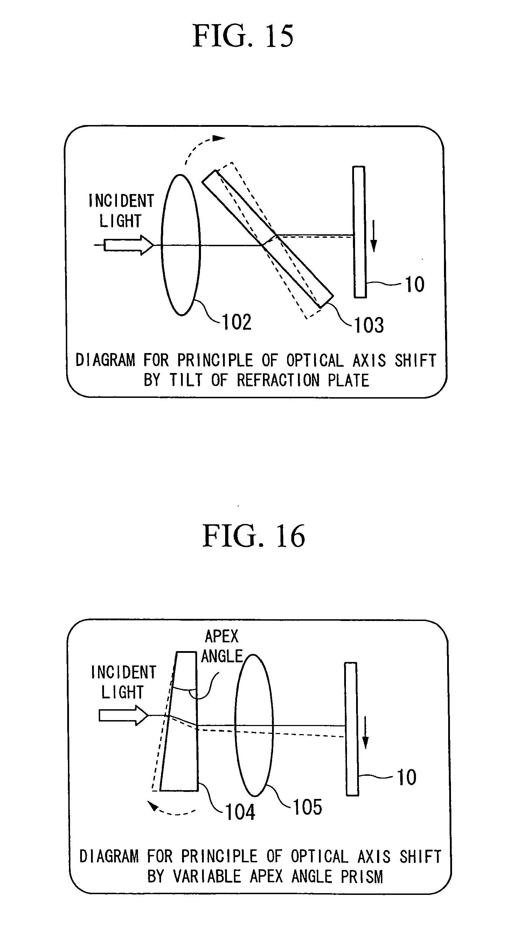

While in the third embodiment, the case in which the liquid crystal lens is used as the optical axis control unit has been described, another unit may be used as the optical axis control unit. FIG 15 is a diagram showing a configuration in which a refraction plate 103 having parallel input and output surfaces is arranged between a solid lens 102 and an imaging element 10, instead of the liquid crystal lens 903 shown in FIG. 13, and the refraction plate 103 is tilted using a tilting means such as an actuator using a piezoelectric element to control an optical axis. As shown in FIG. 15, an optical axis shift amount by the refraction plate 103 is changed by a tilt angle, and thus, an incident position to the imaging element 10 is changed for optical axis shift. Here, since a direction of the optical axis shift due to the tilted refraction plate 103 is only a uniaxial direction (a vertical direction in FIG. 15), a refraction plate for shifting the optical axis in a horizontal direction is separately arranged, such that the optical axis can be shifted in a biaxial direction and the optical axis can be shifted in any direction in an imaging element surface.

FIG. 16 is a diagram showing a configuration for controlling an optical axis using a variable apex angle prism 104 and a solid lens 105. As shown in FIG. 16, an apex angle of the variable apex angle prism 104 is changed by a means such as an actuator using a piezoelectric element, to thereby deflect an incident light, such that a position on an imaging element 10 in which an image is formed by the solid lens 105 is changed. Thus, the optical axis can be shifted. Even in this case, since the direction of an optical axis shift is only a uniaxial direction as shown in FIG. 16 (a vertical direction in FIG. 16), a variable apex angle prism for shifting the optical axis in a horizontal direction is separately arranged for optical axis shift in any direction.

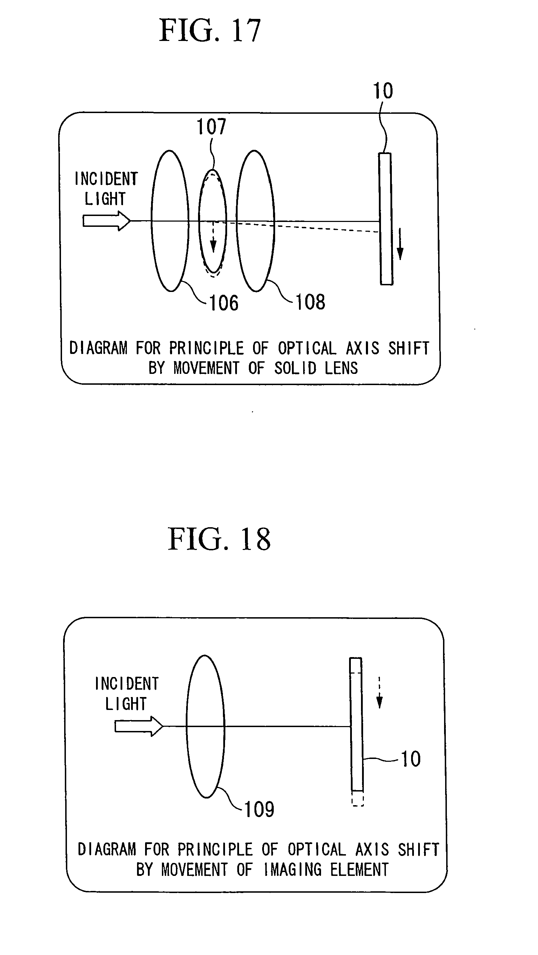

FIG. 17 is a diagram showing a configuration of controlling an optical axis by moving all or some of solid lenses 106, 107 and 108 in a direction substantially vertical to the optical axis using a moving means such as an actuator using a piezoelectric element. In FIG. 17, an optical system includes the three solid lenses 106, 107 and 108, and the solid lens 107 is moved by the moving means such as an actuator using a piezoelectric element capable of moving in a vertical direction and a moving means such as an actuator using a piezoelectric element capable of moving in a horizontal direction. As shown in FIG. 17, when the solid lens 107 is moved, an incident light is deflected and a position on an imaging element 10 in which an image is formed is changed for optical axis shift. This process in the vertical and horizontal directions allows the optical axis to be independently shifted in the vertical and horizontal directions on an imaging element surface.

FIG. 18 shows an example in which an imaging element 10 is directly moved by a moving means such as an actuator using a piezoelectric element. In this case, control of an optical axis shift amount is performed on the imaging element 10, instead of using an optical system 109. As shown in FIG. 18, the imaging element 10 is moved by the moving means such as an actuator using a piezoelectric element moving in a vertical direction and a moving means such as an actuator using a piezoelectric element moving in a horizontal direction, such that a position on the imaging element 10 in which an image is formed is moved for independent optical axis shift in the vertical and horizontal directions.

While, in the above description, the piezoelectric element is used as an actuator for the means for moving the optical system and the means for moving the imaging element, the present invention is not limited thereto but a means such as a solenoid actuator using electromagnetic force, an actuator using a motor and a gear mechanism, and an actuator using pressure may be used. While the optical axis shift direction has been described as the vertical direction and the horizontal direction, the present invention is not limited thereto.

The optical axis is shifted by deflecting the light incident to each imaging system using the optical axis control unit shown in FIGS. 15 to 17, to control each imaging system to satisfy the conditions expressed by Equations (2), (3), (4) and (5) in appearance. Further, the same effect as the optical axis shift can be obtained by moving the imaging element 10 using the optical axis control unit shown in FIG. 18.

Since a plurality of imaging systems are arranged on the straight lines in the substantially vertical direction and the substantially horizontal direction and each imaging system is arranged at a distance satisfying the condition equations (Equations (2), (3), (4) and (5)) for high resolution in a direction orthogonal to the arrangement direction, as described above, high resolution can be realized in a direction orthogonal to the straight line arrangement direction without performing complex control on the optical systems. Further, since the optical axis is shifted by deflecting the light incident to each imaging system using the optical axis control unit for statically moving the direction of the optical axis, to control each imaging system to satisfy the condition equations (Equations (2), (3), (4) and (5)) for high resolution in appearance, high resolution can be realized without performing complex control on the optical systems.

Industrial Applicability

The present invention may be applied when a high-resolution image must be obtained using a plurality of imaging elements.

Reference Symbols

11 to 13, 51 to 53, 61a to 65a, 61b to 65b, 61c to 65c, 71a to 77a, 71b to 77b, 71c to 77c, and 81 to 86 ··· imaging system,
901 ··· liquid crystal lens,
902, 906 ··· glass substrate,
903,905 ··· electrode,
904 ··· liquid crystal layer,
10 ··· imaging element

**Claims**

1.  A multi-eye imaging device comprising M imaging systems each comprising an optical system and an imaging element (M is a natural number greater than or equal to 2),
    wherein the imaging systems comprise one reference imaging system and M-1 dependent imaging systems,
    an imaging surface of an imaging element of the reference imaging system and an imaging surface of an imaging element of the dependent imaging system are arranged in substantially the same plane,
    the imaging element of the reference imaging system and the imaging element of the dependent imaging system are arranged on a straight line that is substantially parallel with a pixel arrangement direction of the imaging element, and
    when a length of one pixel of the imaging element is W, an imaging element of an L-th dependent imaging system (L is a positive integer having a maximum value of M-1) among the dependent imaging systems is arranged at a distance of
    $Wx((L/M) +N)$ (N is a natural number including 0)
    in a direction substantially orthogonal to the straight line in the plane with respect to the imaging element of the reference imaging system.

2.  The imaging device according to claim 1, wherein N=0.

3.  A multi-eye imaging device comprising M imaging systems each comprising an optical system and an imaging element (M is a natural number greater than or equal to 2),
    wherein the imaging systems comprise one reference imaging system and M-1 dependent imaging systems,
    the optical system of at least one of the dependent imaging systems comprise an optical axis control unit which controls an optical axis,
    an imaging surface of an imaging element of the reference imaging system and an imaging surface of an imaging element of the dependent imaging system are arranged in substantially the same plane,
    the imaging element of the reference imaging system and the imaging element of the dependent imaging system are arranged on a straight line that is substantially parallel with a pixel arrangement direction of the imaging element, and
    when a length of one pixel of the imaging element is W, an imaging element of an L-th dependent imaging system (L is a positive integer having a maximum value of M-1) among the dependent imaging systems is arranged at a distance of
    $Wx((L/M) +N)$ (N is a natural number including 0)
    in a direction substantially orthogonal to the straight line with respect to the imaging element of the reference imaging system substantially in the plane by controlling the optical axis using the optical axis control unit.

4.  The imaging device according to claim 3, wherein N=0.

5.  The imaging device according to claim 1 or 3, wherein an arrangement direction of the dependent imaging system and the reference imaging system is substantially orthogonal to an arrangement direction of one dependent imaging system other than said dependent imaging system and said reference imaging system.

6. The imaging device according to claim 3, wherein the reference imaging system comprises an optical member having substantially the same optical distance as the optical axis control unit.

7. The imaging device according to claim 3, wherein the optical axis control unit comprises a non-solid lens having a variable refractive index distribution, and an optical axis of light incident to the imaging element is deflected by changing the refractive index distribution of the non-solid lens.

8. The imaging device according to claim 3, wherein the optical axis control unit comprises a refraction plate and a tilt angle changing means which changes a tilt angle of said refraction plate, and an optical axis of light incident to the imaging element is deflected by changing the tilt angle of the refraction plate using the tilt angle changing means.

9. The imaging device according to claim 3, wherein the optical axis control unit comprises a variable apex angle prism, and an optical axis of light incident to the imaging element is deflected by changing an apex angle of the variable apex angle prism.

10. The imaging device according to claim 3, wherein the optical axis control unit comprises a moving means which moves the solid lens, and an optical axis of light incident to the imaging element is deflected by moving the solid lens.

11. The imaging device according to claim 3, wherein the optical axis control unit comprises a moving means which moves the imaging element, and an optical axis of light incident to the imaging element is controlled by moving the imaging element.

# FIG. 1

11

12

BV=1/2 PIXELS

13

BH=1/2 PIXELS

FIG. 2

# FIG. 3

BASE LENGTH BH=3 $\mu$m, PIXEL PITCH 6 $\mu$m, FOCAL LENGTH 5 mm, IMAGING DISTANCE 500 mm

— u0–u1

IMAGING DISTANCE (mm)

EP 2 352 277 A1

# FIG.4

51

52

53

1/3 PIXELS

1/3 PIXELS

# FIG. 5

64a    65a

61a

62a

63a

# FIG. 6

61b

62b    64b    65b

63b

# FIG. 7

# FIG. 8

# FIG. 9

# FIG. 10

18

# FIG. 11

# FIG. 12

VERTICAL
DIRECTION

201

202

HORIZONTAL
DIRECTION

203

204

# FIG. 13

901

902
903
904
905
906

# FIG. 14

903

903e

903a

903c

903b

903d

## FIG. 15

INCIDENT LIGHT

~102

~103

~10

DIAGRAM FOR PRINCIPLE OF OPTICAL AXIS SHIFT
BY TILT OF REFRACTION PLATE

## FIG. 16

APEX
ANGLE

INCIDENT LIGHT

~104

~105

~10

DIAGRAM FOR PRINCIPLE OF OPTICAL AXIS SHIFT
BY VARIABLE APEX ANGLE PRISM

# FIG. 17

DIAGRAM FOR PRINCIPLE OF OPTICAL AXIS SHIFT
BY MOVEMENT OF SOLID LENS

# FIG. 18

DIAGRAM FOR PRINCIPLE OF OPTICAL AXIS SHIFT
BY MOVEMENT OF IMAGING ELEMENT

# FIG. 19

VERTICAL DIRECTION

BASE LENGTH BH

BASE LENGTH BV

BASE LENGTH B

HORIZONTAL DIRECTION

# FIG. 20

121a

121b

SUBJECT

122a

SUBJECT

122b

# FIG. 21

<table>
<tr><td colspan="2" align="center">**INTERNATIONAL SEARCH REPORT**</td><td>International application No.</td></tr>
<tr><td colspan="2"></td><td>PCT/JP2009/005996</td></tr>
</table>

A. CLASSIFICATION OF SUBJECT MATTER
*H04N5/225*(2006.01)i, *G02B1/06*(2006.01)i, *G02B3/00*(2006.01)i, *G02B3/14* (2006.01)i, *G02B7/00*(2006.01)i, *G03B19/00*(2006.01)i, *H04N5/335*(2006.01)i

According to International Patent Classification (IPC) or to both national classification and IPC

B. FIELDS SEARCHED

Minimum documentation searched (classification system followed by classification symbols)
H04N5/225, G02B1/06, G02B3/00, G02B3/14, G02B7/00, G03B19/00, H04N5/335

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2007/013250 A1 (Matsushita Electric Industrial Co., Ltd.),<br>01 February 2007 (01.02.2007),<br>paragraphs [0012] to [0018], [0023] to [0028], [0030] to [0041], [0049] to [0055], [0080]; fig. 1 to 8<br>& US 2009/0127430 A1 & EP 1912434 A1<br>& CN 101228781 A | 1-5,10<br>6-9,11 |

☒ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>27 November, 2009 (27.11.09) | Date of mailing of the international search report<br>08 December, 2009 (08.12.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| | International application No. |
|---|---|
| | PCT/JP2009/005996 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2007-520166 A  (Digital Optics Corp.),<br>19 July 2007 (19.07.2007),<br>abstract; paragraphs [0053] to [0054]<br>& US 2005/0073603 A1    & US 2005/0225654 A1<br>& US 2008/0285965 A1    & US 2007/0126898 A1<br>& EP 1712087 A2        & EP 2044629 A2<br>& WO 2005/072370 A2    & WO 2006/031643 A1<br>& WO 2008/011003 A2    & KR 10-2007-0019979 A<br>& CN 1934872 A         & KR 10-2009-0034981 A | 6-9 |
| Y | JP 2000-244932 A  (Mitsubishi Electric Corp.),<br>08 September 2000 (08.09.2000),<br>paragraph [0155]<br>(Family: none) | 7 |
| Y | WO 2006/064751 A1  (Matsushita Electric<br>Industrial Co., Ltd.),<br>12 June 2006 (12.06.2006),<br>paragraphs [0079] to [0084]<br>& US 2007/0159535 A1    & CN 1918902 A | 8,11 |
| Y | JP 07-322149 A  (Canon Inc.),<br>08 December 1995 (08.12.1995),<br>paragraph [0081]<br>& US 6018363 A | 9 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008289618 A

**Non-patent literature cited in the description**

- *The Institute of Image Electronics Proceedings,* 04 March 1990, 23-28